# EUROPÄISCHE PATENTSCHRIFT

(11) **EP 4 063 164 B1**
(45) Veröffentlichungstag und Bekanntmachung des Hinweises auf die Patenterteilung: **05.03.2025**
(21) Anmeldenummer: 21000081.6
(22) Anmeldetag: 22.03.2021
(51) Int. Cl.: B60K 15/03, B60K 15/063

(54) **ACHSE, NUTZFAHRZEUG MIT DER ACHSE UND VERWENDUNG**
AXLE, COMMERCIAL VEHICLE WITH AXLE AND USE
ESSIEU, VÉHICULE UTILITAIRE POURVU D'ESSIEU ET UTILISATION

(43) Veröffentlichungstag der Anmeldung: 28.09.2022
(73) Patentinhaber: MARMIX GmbH & Co. KG, 89597 Unterwachingen (DE)
(72) Erfinder: Kaesemann, Thomas, 89597 Unterwachingen (DE)
(74) Vertreter: Kienle, Thomas

(56) Entgegenhaltungen:
- EP-A1- 1 380 460
- WO-A1-2017/055694
- WO-A1-2020/207723
- DE-A1- 102009 038 679
- DE-U1- 202015 007 764

## Beschreibung

### TECHNISCHES GEBIET

Die vorliegende Erfindung betrifft eine Achse für ein Fahrzeug, insbesondere in Nutzfahrzeug. Ferner betrifft die Erfindung ein Nutzfahrzeug, insbesondere einen Traktor, mit der Achse.

### STAND DER TECHNIK

Herkömmliche Nutzfahrzeuge, wie zum Beispiel Traktoren und Lastkraftwagen, werden überwiegend von Dieselmotoren angetrieben. Dieselmotoren gelten als sparsam, langlebig und sie produzieren weniger umweltschädliches Kohlendioxid als Benzinmotoren. Dieselmotoren arbeiten mit einem höheren Verdichtungsverhältnis und mit höheren Verbrennungstemperaturen als Benzinmotoren. Deshalb sind Dieselmotoren meist robuster, schwerer und teurer als Benzinmotoren. Dieselkraftstoff weist eine höhere Energiedichte als Benzin auf, sodass Dieselfahrzeuge entweder mit einem kleineren Tank als Benzinfahrzeuge auskommen oder eine höhere Reichweite bzw. Betriebszeit mit einer Tankfüllung haben als Benzinfahrzeuge. Bei der Verbrennung erzeugen Dieselmotoren Rußpartikel, die auch Feinstaub enthalten. Die Rußpartikel werden heutzutage aufwendig durch Dieselpartikelfilter reduziert. Dies verteuert den Einsatz von Dieselmotoren. Ferner erzeugen Dieselmotoren gesundheitsschädliche Stickoxide NOx. Mittels spezieller Katalysatoren mit Harnstoff wird derzeit versucht, den Stickstoffdioxidausstoß bei Dieselmotoren zu reduzieren; auch dies ist aufwendig und teuer. Um den Problemen von Verbrennungsmotoren für fossile Kraftstoffe zu begegnen ist seit langem bekannt, Dieselmotoren auf die Verbrennung von Wasserstoff umzurüsten, die auch als Wasserstoffmotor bezeichnet werden. Wasserstoff hat eine höhere Energiedichte als Dieselkraftstoff. Da Wasserstoff keine Kohlenstoffatome enthält ist das Verbrennungsabgas in solchen Motoren im Wesentlichen umweltschonender und nicht gesundheitsgefährdender Wasserdampf.

Wasserstoff hat unter Normalbedingungen eine geringe Dichte von 0,089882 kg/m³. Für einen effizienten Betrieb eines Fahrzeugs mit Wasserstoffmotor ist daher die ausreichende Speicherung bzw. Bevorratung von Wasserstoff wichtig.

Häufig wird Wasserstoff in dedizierten Tanks bevorratet, die wiederum auf Fahrzeugkabinen-Dächern, an Traktorschutzblechen oder nahe an Achsen montiert sind.

Aus der WO2017055694 ist eine Hinterachse-Räder-Baugruppe für Kraftfahrzeuge bekannt. Die Hinterachse-Räder-Baugruppe umfasst eine zentrale Verbindungsstütze, die mindestens einen ersten vorderen Querträger und einen zweiten Querträger aufweist, wobei der zweite Querträger hinter dem ersten Querträger angeordnet ist; wenigstens zwei Gelenke mit jeweils mindestens zwei unteren Aufhängungsarmen, die jeweils einen zugehörigen Achsschenkel mit einer Seite der zentralen Verbindungsstütze verbinden, wobei jeder Aufhängungsarm schwenkbar am ersten und zweiten Querträger der zentralen Verbindungsstütze angelenkt ist. Die zentrale Verbindungsstütze weist ferner einen Tank auf, der von einer starren Außenwandung umgeben ist, wobei die der erste und der zweite Querträger durch die Außenwandung des Tanks miteinander verbunden sind.

In der DE102009038679 ist ein Brennstoffspeichersystem für ein brennstoffzellenbetriebenes Fahrzeug offenbart, das ein Aufhängungssystem, einen Brennstofftank sowie ein Stützsystem aufweist, wobei das Aufhängungssystem, der Brennstofftank und das Stützsystem zusammenwirken, um Fahrzeugkonstruktionslasten sowie die Reaktionslasten des Aufhängungssystems zu tragen und ein Volumen des Brennstofftanks zu maximieren.

Das Gebrauchsmuster DE 202015007764 beschreibt einen Tank in einem Hohlraum zwischen einem Luftreifen und einer Felge, um darin Siliermittel, Harnstoff, Treibstoff, Kühlmittel oder Schmierstoffe zu speichern.

### ZUSAMMENFASSUNG DER ERFINDUNG

Somit besteht eine Aufgabe der Erfindung darin, einen Kraftstofftank platzsparend in einem Fahrzeug anzuordnen. Eine weitere Aufgabe der Erfindung besteht darin vorhandenen Bauraum in einem Fahrzeug besser zu nutzen.

Erfindungsgemäß wird eine Achse für ein Fahrzeug gemäß Anspruch 1 bereitgestellt. Insbesondere umfasst das Fahrzeug ein Nutzfahrzeug. Das Fahrzeug weist insbesondere einen ersten Achsabschnitt und einen zweiten Achsabschnitt auf, wobei der zweite Achsabschnitt mit dem ersten Achsabschnitt verbunden ist. Der erste Achsabschnitt und der zweiten Achsabschnitt können einen Hohlraum bilden, der zum Bevorraten von Kraftstoff für den Antrieb des Fahrzeugs ausgelegt ist.

Der Begriff Nutzfahrzeug umfasst insbesondere eine oder mehrere der folgenden Bedeutungen: Landfahrzeug; Radfahrzeug; Löschfahrzeug; militärisches Radfahrzeug, z.B.: Trägerfahrzeug, Selbstfahrlafette, Bergefahrzeug, Abschleppfahrzeug, Minenräumfahrzeug; landwirtschaftliches Fahrzeug, z.B.: Traktor, Schlepper, Erntemaschine, Sämaschine; Zugmaschine; selbstfahrendes Arbeitsgerät; Baumaschine, z.B.: Bagger, Fahrbagger, Bohrgerät, Fahrzeugkran, Arbeitsbühne; forstwirtschaftliches Fahrzeug, z.B. Holzvollernter, Tragschlepper, Rückezug, Skidder; Lastkraftwagen; Teleskoplader.

Der Begriff "erster Achsabschnitt" umfasst insbesondere folgende Bedeutungen: Achsstummel, Achsteil, Achshälfte und/oder Achszapfen. Der erste Achsabschnitt kann mit einem anderen Achsabschnitt und/oder mit einem Rahmen des Fahrzeugs verbunden sein. Der erste Achsabschnitt kann lösbar, etwa mittels Schraubverbindungen, mit dem Rahmen verbunden sein.

Der Begriff "zweiter Achsabschnitt" umfasst insbesondere folgende Bedeutungen: Achsstummel, Achsteil, Achshälfte, Achszapfen, Naben-artig angeordnetes Teil und/oder Felgen-artig angeordnetes Teil. Der zweite Achsabschnitt kann mit einem anderen Achsabschnitt und/oder mit einem Rahmen des Fahrzeugs verbunden sein. Der zweite Achsabschnitt kann lösbar, etwa mittels Schraubverbindungen, mit dem Rahmen verbunden sein.

Das Bevorraten von Kraftstoff meint im Allgemeinen ein vorübergehendes Speichern, ein Bunkern oder Lagern von Gasen und/oder Flüssigkeiten, um sie zu Tanken und später einem Motor des Fahrzeugs zur Verbrennung zuführen zu können.

Der erste Achsabschnitt ist im Wesentlichen ein Element mit einer Wandung, die einen ersten Achsabschnitt-Hohlraum wenigstens teilweise umschließt, also ein länglicher Hohlkörper, auch als Rohr bezeichnet. Der zweite Achsabschnitt ist im Wesentlichen ein Element mit einer Wandung, die einen zweiten Achsabschnitt-Hohlraum wenigstens teilweise umschließt. Der erste Achsabschnitt-Hohlraum und der zweite Achsabschnitt-Hohlraum können den Hohlraum bilden. Der Hohlraum umfasst ein Volumen von vorzugsweise 500 - 1000 Liter, noch bevorzugter von 700 - 900 Liter. Die Wandung des ersten Achsabschnitts und des zweiten Achsabschnitts sind insbesondere so dimensioniert, dass sie eine tragende Funktion im Fahrzeug ausüben können.

Ferner können der erste Achsabschnitt und der zweite Achsabschnitt einen Druckbehälter für die Lagerung von komprimierten Kraftstoff bilden. Der Druckbehälter ist für Drücke von 600 bis 800 bar, noch bevorzugter 700 bar, ausgelegt. Besonders bevorzugt ist z.B. in typischer Druck von 700 bar. Vorzugsweise können der erste Achsabschnitt und der zweite Achsabschnitt als Ersatzteile ausgelegt sein, die anstatt einer herkömmlichen Achse bzw. eines herkömmlichen Achsabschnitts und anstatt einer herkömmlichen Nabe - daher Naben-artig - bzw. einer herkömmlichen Felge - daher Felgen-artig - an einem Fahrzeug angeordnet werden. Herkömmliche Achsen, Naben und Felgen weisen typischerweise keinen Hohlraum für Bevorratung von Kraftstoff auf. Die erfindungsgemäße Achse erlaubt einen Kraftstofftank platzsparend im Fahrzeug anzuordnen.

Herkömmliche Kraftstofftanks sind typischerweise hinter der Hinterachse, in einem Kofferraum, über der Hinterachse oder seitlich an einem Fahrzeug angeordnet, um vor äußeren Umwelteinflüssen geschützt zu sein. Die Funktion herkömmlicher Kraftstofftanks besteht meist lediglich darin Kraftstoff zu speichern. Die erfindungsgemäße Achse kann dagegen eine tragende Funktion für Räder, Felgen, Lenkung, Bremse, Antrieb und/oder Federung übernehmen sowie zusätzlich als stabiler Kraftstofftank genutzt werden. Dies hat unter anderem den Vorteil, dass die erfindungsgemäße Achse bisher ungenutzten Bauraum nutzt. Ferner ermöglicht die Anordnung der erfindungsgemäßen Achse einen tieferen Fahrzeug-Schwerpunkt als herkömmliche Tanks, die typischerweise über den Fahrzeugachsen angeordnet sind. Da kein zusätzliches Material für einen Kraftstofftank erforderlich ist, sondern im Wesentlichen Achs-Bauelement so umgestaltet werden, dass sie auch als Tank wirken, verhilft die erfindungsgemäße Achse zu einer Kostenreduzierung. Abmessungen von Nutzfahrzeugen sind oft nahe gesetzlicher Grenzen ausgelegt. Soll bei einem solchen Nutzfahrzeug ein Tankvolumen erhöht oder ein zusätzlicher Tank am Nutzfahrzeug angeordnet werden, so würde herkömmliche separate Tanks die gesetzliche Maximalabmessungen überschreiten. Die erfindungsgemäße Achse erlaubt ein Anordnen eines Kraftstoffspeichers ohne die gesetzlichen Abmessungsgrenzen zu überschreiten.

In einer weiteren bevorzugten Ausführungsform sind der erste Achsabschnitt und der zweite Achsabschnitt im Wesentlichen starr miteinander verbunden. Das heißt, der zweite Achsabschnitt ist im Allgemeinen nicht bezüglich des ersten Achsabschnitts drehbar. Der zweite Achsabschnitt und der erste Achsabschnitt können einstückig ausgebildet sein.

Gemäß einer weiteren bevorzugten Ausgestaltung der Erfindung umfasst der Kraftstoff insbesondere Wasserstoff oder Methan. Der Wasserstoff wird insbesondere gasförmig im Hohlraum bevorratet. Der Hohlraum ist im Allgemeinen ungekühlt.

In einer weiteren Ausführungsform der Erfindung umfasst der zweite Achsabschnitt insbesondere einen Hohlzylinderabschnitt mit einem Deckel und einem Boden. Der Deckel und der Boden sind insbesondere parallel zueinander angeordnet. Die Außenabmessung des Hohlzylinderabschnitts entspricht im Wesentlichen der einer herkömmlichen Radfelge. Der Hohlzylinderabschnitt erlaubt insbesondere Bauraum für die Speicherung von Kraftstoff zu nutzen, der von einer herkömmlichen Radfelge bisher ungenutzt bleibt.

Gemäß einer weiteren Ausgestaltung der Erfindung umfasst die zweite Achsabschnitt ein Wälzlager. Wälzlager sind im Allgemeinen Lager, bei denen zwischen einem Innenring und einem Außenring rollende Körper einen Reibungswiderstand verringern. Der Innenring des Wälzlagers ist z.B. außen am Hohlzylinderabschnitt angeordnet. Das Wälzlager umfasst Kugellager, Ringlager, Rillenkugellager, Schrägkugellager, Pendelkugellager, Zylinderrollenlager, Kegelrollenlager, etc. Der zweite Achsabschnitt umfasst wenigstens ein erstes und eine zweites Wälzlager, die axial nebeneinander angeordnet sind.

In einer weiteren Ausführungsform der Erfindung umfasst die Achse eine Orbitalradfelge. Herkömmliche Felgen werden umfangssprachlich oft als Rad bezeichnet. Im Allgemeinen umfasst eine bekannte Felge einen äußeren, zylinderförmigen Ring, eine Radscheibe bzw. einen Radkranz, der im zylinderförmigen Ring angeordnet ist, und einen Radflansch, der im Zentrum der Radscheibe angeordnet ist. Der Radflansch kann mit einer herkömmlichen Nabe verbunden werden. Ein Orbitalrad bzw. eine Orbitalradfelge wird im Allgemeinen auch als nabenloses Rad bezeichnet. Im Wesentlichen hat das Orbitalrad keine Radscheibe und keinen Radflansch. Das Fehlen von Radscheibe und Radflansch kann Bauraum zum Speichern von Kraftstoff schaffen. Die Abmessung des Hohlraums hängt insbesondere von einer Orbitalradbreite und/oder einem Orbitalraddurchmesser ab.

Anders als ein herkömmliches Rad umfasst die Orbitalradfelge keine in der Mitte gelagerte Nabe, sondern wird am Radumkreis ("Orbit") gehalten.

Gemäß einer weiteren Ausgestaltung der Erfindung kann die Orbitalradfelge mittels des Wälzlagers drehbar am zweiten Achsabschnitt angeordnet sein. Anders gesagt lagert das Wälzlager die Orbitalradfelge drehbar bezüglich zweiten Achsabschnitts. Die Orbitalradfelge kann mittels des ersten und zweiten Wälzlager drehbar an dem zweiten Achsabschnitt angeordnet sein. Die Orbitalradfelge, das Wälzlager und der zweite Achsabschnitt können eine herkömmliche Nabe-Felge-Baugruppe ersetzen. Genauer gesagt, können Orbitalradfelge, das Wälzlager und der zweite Achsabschnitt Ersatzteile für eine herkömmliche Nabe-Felge-Baugruppe bilden.

Gemäß einer weiteren bevorzugten Ausführung der Erfindung umfasst die Orbitalradfelge einen Zahnkranz. Ein Zahnkranz ist im Allgemeinen einen innen, außen und/oder seitlich verzahnter Zahnring. Der Zahnkranz ist vorzugsweise konzentrisch bzw. koaxial zur und an der Orbitalradfelge angeordnet. Zur Erleichterung der Montage kann der Zahnkranz aus mehreren Zahnkranzabschnitten gebildet sein, die miteinander und/oder mit der Orbitalradfelge verbunden, z.B. verschraubt, werden. Der Zahnkranz kann einstückig mit der Orbitalradfelge ausgebildet sein. Der Zahnkranz kann kombiniert oder einstückig mit dem Wälzlager ausgebildet sein. Der Zahnkranz ist insbesondere bezüglich des ersten Achsabschnitts drehbar angeordnet. Der Zahnkranz dienst im Wesentlichen dazu eine vom Motor des Fahrzeugs erzeugte Kraft bzw. ein Drehmoment aufzunehmen, damit die Orbitalradfelge angetrieben werden kann. Herkömmliche Räder werden im Unterschied dazu von einer Welle-Nabe-Verbindung angetrieben. Die erfindungsgemäße Achse ersetzt jedoch die Welle-Nabe-Verbindung, um Bauraum für das Speichern von Kraftstoff bereitstellen zu können.

Die Orbitalradfelge, der Zahnkranz, das Wälzlager und der zweite Achsabschnitt sind vorzugweise konzentrisch bzw. koaxial zu einer gemeinsamen Drehachse angeordnet.

In einer weiteren Ausgestaltung der Erfindung umfasst die Achse insbesondere wenigstens ein Antriebsritzel, das in den Zahnkranz eingreift und die Orbitalradfelge antreibt. Das Antriebsritzel ist exzentrisch zur Antriebsachse angeordnet. Das Antriebsritzel kann ferner mit einer Antriebswelle des Fahrzeugs verbunden sein. Vorzugsweise ist das Antriebsritzel über eine Welle mit einem Differential des Fahrzeugs verbunden. Ferner umfasst die Achse ein erstes und zweites Antriebsritzel, die jeweils innen, außen oder seitlich in den Zahnkranz eingreifen. Mehrere Antriebsritzel können mehr Drehmoment übertragen. Ferner werden mehrere, insbesondere drei, Antriebsritzel vorgeschlagen, die ähnlich Planetenrädern in einem Planetengetriebe angeordnet sind.

Gemäß einer weiteren bevorzugten Ausführung der Erfindung umfasst die Achse insbesondere einen Niederquerschnittsreifen, der an der Orbitalradfelge angeordnet ist. Anders gesagt der Niederquerschnittsreifen kann auf die Orbitalradfelge aufgezogen sein. Die Orbitalradfelge, der Zahnkranz, das Wälzlager, der zweite Achsabschnitt und der Niederquerschnittsreifen sind vorzugweise konzentrisch bzw. koaxial zur gemeinsamen Drehachse angeordnet. Der Niederquerschnittsreifen überträgt im Wesentlichen die Kräfte zwischen Orbitalradfelge und Fahrbahn. Niederquerschnitt meint dabei ein Reifenflankenhöhe zu Reifenbreite Verhältnis, auch Querschnittsverhältnis genannt, von weniger als 90%, insbesondere von weniger als 88%, noch bevorzugter in einem Bereich von 80 - 50%. Der Niederquerschnittsreifen kann helfen Bauraum zum Speichern von Kraftstoff zu schaffen.

In einer weiteren bevorzugten Ausführungsform umfasst die Achse eine mechanische und/oder hydropneumatische Federung. Die mechanische und/oder hydropneumatische Federung kann die Achse bezüglich eines die Achse umfassenden Fahrzeugs dämpfen. Der Einsatz von Niederquerschnittsreifen vermindert im Allgemeinen eine Stoßdämpfung. Die mechanische und/oder hydropneumatische Federung dämpft vorteilhaft Stöße, die etwa von Fahrbahnunebenheiten über die Niederquerschnittsreifen in die Achse eingeleitet werden. Die mechanische und/oder hydropneumatische Federung bewirkt eine Erhöhung der Betriebssicherheit des Hohlraums; eine Erhöhung des Fahrkomforts bzw. eine Verbesserung der Ergonomie für Fahrzeuge, die mit der erfindungsgemäßen Achse und der mechanischen und/oder hydropneumatischen Federung ausgerüstet sind; und/oder eine Verbesserung des Arbeitsschutz und der Verkehrssicherheit.

In weiteren bevorzugten Ausführungsform der Erfindung kann die Achse eine Einfüllvorrichtung umfassen, die an einem ersten Ende mit dem Hohlraum verbunden sein kann und an deren zweiten Ende Kraftstoff in den Hohlraum einfüllbar ist. Entweder ersetzt die Einfüllvorrichtung einen herkömmlichen Einfüllstutzen und ein herkömmliches Einfüllrohr des Fahrzeugs oder das Fahrzeug umfasst zusätzlich zum herkömmlichen Einfüllstutzen und zum herkömmlichen Einfüllrohr die Einfüllvorrichtung gemäß der Erfindung. Die Einfüllvorrichtung ist insbesondere druckstabil ausgelegt, um Wasserstoff unter hohem Druck leiten zu können. Die Einfüllvorrichtung kann an ihrem zweiten Ende mit einer Zapfvorrichtung einer Wasserstoff-Tankstelle verbunden werden, um gasförmigen Wasserstoff zu tanken, d.h. insbesondere dem Hohlraum zuzuführen.

Ferner ist es bevorzugt, dass die Achse eine Kraftstoffleitung umfasst, die an einem ersten Ende mit dem Hohlraum und an einem zweiten Ende mit einem Verbrennungsmotor verbunden sein kann. Die Kraftstoffleitung ist insbesondere druckstabil ausgelegt, um im Hohlraum bevorratetes Wasserstoffgas dem Verbrennungsmotor zuführen zu können. Die Kraftstoffleitung gemäß der Erfindung kann eine herkömmliche Kraftstoffleitung eines Dieselmotors ersetzen. Genauer gesagt kann die Kraftstoffleitung gemäß der Erfindung ein Ersatzteil bilden.

Vorzugsweise umfasst der Hohlraum eine Verstärkungsstruktur, insbesondere eine Wabenstruktur. Ferner umfasst die Verstärkungsstruktur Verstrebungen, Stützen oder ähnliches, die im Hohlraum angeordnet werden können, um eine hohe Druckstabilität des Hohlraums über eine längere Zeit zu erzielen. Ferner kann die Verstärkungsstruktur helfen mechanische Kräfte zwischen Rahmen und zweiten Achsabschnitt aufzunehmen, etwa Biegemomente, Stauchungen, Zugkräfte, die vom Fahren auf der Fahrbahn hervorgerufen werden.

Gemäß einer weiteren bevorzugten Ausführungsform kann der Hohlraum einen Kraftstoffinnentank umfassen, wobei der Kraftstoffinnentank vom Hohlraum umgeben ist. So entsteht vorteilhaft ein Kraftstoffspeicher mit zwei Kammern, einer inneren und einer äußeren Kammer. Der Kraftstoffinnentank kann mit Kraftstoff unter einem ersten Druck gefüllt sein und der Hohlraum bzw. die äußere Kammer, kann mit Kraftstoff unter einem zweiten Druck gefüllt sein. Der zweite Druck kann als Gegendruck auf den Kraftstoffinnentank bzw. die innere Kammer wirken. Der Gegendruck kann die Druckstabilität des Kraftstoffinnentanks erhöhen oder erlaubt den Kraftstoffinnentank insbesondere mit einer geringeren Wandstärke herzustellen. Der erste Druck beträgt z.B. bis zu 700 bar und der zweite Druck beträgt z.B. bis zu 70 bar. Der Kraftstoffinnentank kann Ellipsoid-förmig bzw. Linsenförmig ausgebildet sein. Diese Form erhöht vorzugsweise die Druckstabilität des Kraftstoffinnentanks.

Gemäß einer weiteren bevorzugten Ausführungsform umfasst der Kraftstoffinnentank ein Druckventil. Das Druckventil kann in Abhängigkeit vom Druck in der inneren und äußeren Kammer den Durchfluss von Kraftstoff zwischen den beiden Kammern erlauben. Die innere Kammer ist vorzugsweise mit Kraftstoff mit einem höheren Druck befüllt als die äußere Kammer. Wird Kraftstoff aus der inneren Kammer verbraucht und sinkt der erste Druck unter den zweiten Druck, so kann das Druckventil öffnen und Kraftstoff aus der äußeren in die innere Kammer durchfließen lassen.

Ferner wird erfindungsgemäß ein Nutzfahrzeug, insbesondere ein Traktor, gemäß Anspruch 14 zur Verfügung gestellt. Das erfindungsgemäße Nutzfahrzeug umfasst im Wesentlichen einen Wasserstoffverbrennungsmotor und wenigstens eine erste erfindungsgemäße Achse. Der Wasserstoffmotor umfasst insbesondere einen auf die Verbrennung von Wasserstoffgas umgerüsteten Dieselmotor. Die Verbrennung von Wasserstoff ist typischerweise umweltschonend und nicht gesundheitsgefährdend. Wasserstoff hat unter Normalbedingungen im Allgemeine eine geringe Dichte von 0,089882 kg/m3. Für einen effizienten Betrieb des Nutzfahrzeug mit dem Wasserstoffmotor kann Wasserstoff in der ersten erfindungsgemäßen Achse bevorratet sein. Gemäß einer weiteren Ausgestaltung umfasst der Traktor eine Brennstoffzelle als Antriebsmittel. Die erfindungsgemäße Achse kann Wasserstoff für die Brennstoffzelle bevorraten.

Es ist ferner bevorzugt, dass die erste erfindungsgemäße Achse und eine zweite Achse eine Hinterachse des erfindungsgemäßen Nutzfahrzeugs bilden. Die Hinterachse kann eine herkömmliche Traktorhinterachse ersetzen. Anders gesagt kann die Hinterachse ein Ersatzteil für herkömmliche Traktorhinterachsen bilden. Es ist außerdem bevorzugt, dass eine dritte Achse und eine vierte Achse eine Vorderachse des erfindungsgemäßen Nutzfahrzeugs bilden. Die zweiten Achsabschnitte bzw. die dritte und die vierte Achse der Vorderachse können lenkbar ausgelegt sein. Zwei bzw. vier Achsen können mehr Kraftstoff speichern als eine.

Ferner wird eine Verwendung einer Fahrzeugachse und/oder eines Achsabschnitts zum Speichern von Wasserstoff vorgeschlagen. Die Fahrzeugachse umfasst insbesondere einen Achsstummel, ein Achsteil, eine Achshälfte und/oder einen Achszapfen. Ferner kann die Fahrzeugachse die erfindungsgemäße Achse umfassen. Der Achsabschnitt umfasst insbesondere den zweiten Achsabschnitt der erfindungsgemäßen Achse.

Vorteilhafte Weiterbildungen der Erfindung sind in den Unteransprüchen angegeben und in der Beschreibung beschrieben.

### KURZE BESCHREIBUNG DER ZEICHNUNGEN

Ausführungsbeispiele der Erfindung werden anhand der Zeichnungen und der nachfolgenden Beschreibung näher erläutert. Es zeigen:
- Figur 1: ein Ausführungsbeispiel einer Achse gemäß der Erfindung,
- Figur 2: ein weiteres Ausführungsbeispiel einer Achse in einem Querschnitt gemäß der Erfindung und
- Figur 3: ein Ausführungsbeispiel eines Nutzfahrzeugs mit der Achse gemäß der Erfindung.

### BESCHREIBUNG DER AUSFÜHRUNGSFORMEN

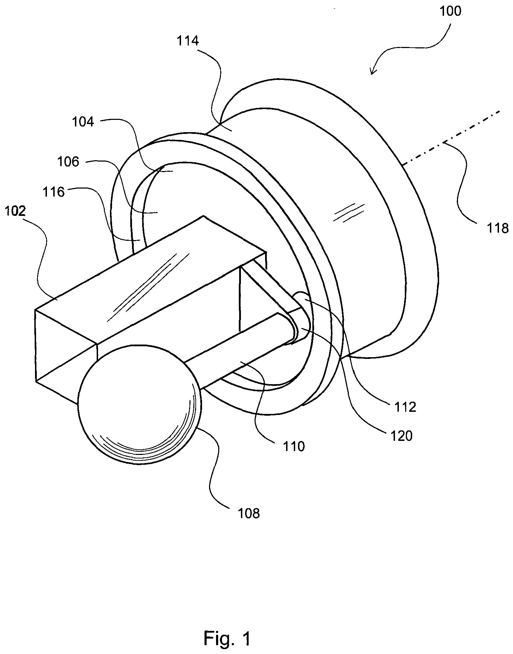

In der Figur 1 ist eine Achse 100 gezeigt. Die Achse 100 umfasst einen ersten Achsabschnitt 102 und einen zweiten Achsabschnitt 104. Der zweite Achsabschnitt 104 ist aus Stahl hergestellt und umfasst einen zylinderförmigen Körper mit einem Deckel und einem Boden 106. Der zweite Achsabschnitt 104 umschließt einen zweiten Achsabschnitthohlraum. Der erste Achsabschnitt 102 ist aus Stahl hergestellt und umfasst ein Vierkantrohr, wobei eine Stirnseite des Vierkantrohrs mit dem Boden 106 verschweißt ist. Das Vierkantrohr umschließt einen ersten Achsabschnitthohlraum, der mit dem zweiten Achsabschnitthohlraum verbunden ist. Der erste Achsabschnitthohlraum und der zweite Achsabschnitthohlraum bilden einen Druckbehälter mit einem Volumen von 800 Liter zum Speichern von Wasserstoffgas. Das Wasserstoffgas dient zum Antrieb eines Wasserstoffverbrennungsmotors eines Fahrzeugs, wobei das Fahrzeug die Achse 100 und den Wasserstoffverbrennungsmotor umfasst. Der Druckbehälter ist platzsparend in dem Fahrzeug angeordnet. Die Achse 100 wirkt sowohl als tragendes Element des Fahrzeugs als auch als Druckbehälter, so kann vorhandener Bauraum im Fahrzeug besser genutzt werden.

Die Achse 100 umfasst ferner ein Achsdifferential 108, eine Achswelle 110 und ein Antriebsritzel 112. Das Achsdifferential 108 übersetzt ein vom Wasserstoffverbrennungsmotors erzeugtes und von einer Antriebswelle (nicht gezeigt) übertragenes Drehmoment auf die Achswelle 110. Die Achswelle 110 ist mit dem Antriebsritzel 112 verbunden. Ferner umfasst die Achse eine Orbitalradfelge 114, die um den zweiten Achsabschnitt 104 drehbar gelagert ist, und einen Zahnkranz 116, der an der Orbitalradfelge 114 angeordnet ist. Die Orbitalradfelge 114, der Zahnkranz 116 und der zweite Achsabschnitt 104 sind koaxial zu einer Symmetrieachse 118 angeordnet. Das Antriebsritzel 112 steht in Eingriff mit dem Zahnkranz 116. Das Drehmoment treibt die Orbitalradfelge 114 so an, dass sie sich bezüglich des zweiten Achsabschnitts 104 und um die Symmetrieachse 118 dreht. Die Achse 100 umfasst außerdem ein Achswellenlager 120, das am ersten Achsabschnitt 102 angeordnet ist und das die Achswelle 110 drehbar lagert.

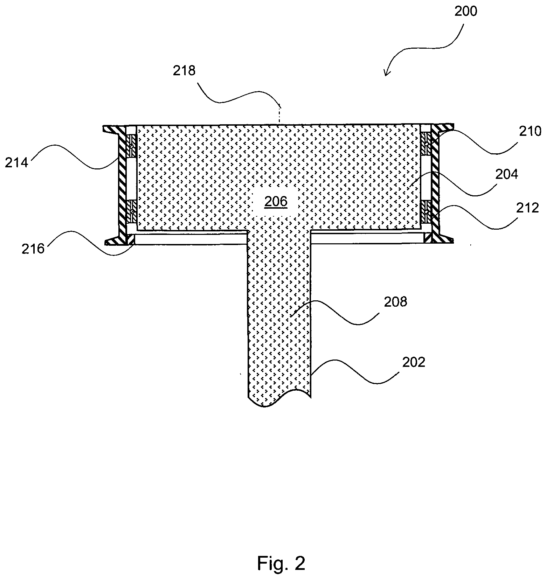

In der Figur 2 eine Achse 200 in einer Querschnittsdarstellung gezeigt. Die Achse 200 umfasst einen ersten Hohlraumabschnitt 202 mit einer Form bzw. einer äußeren Abmessung, die einem herkömmlichen Fahrzeugachsenabschnitt entspricht. Ferner umfasst die Achse 200 einen zweiten Hohlraumabschnitt 204 mit einer Form bzw. einer äußeren Abmessung, die einer herkömmlichen Felge entspricht. Der erste und der zweite Hohlraumabschnitt 202, 204 bilden einen Hohlraum 206. Der Hohlraum 206 speichert Wasserstoffgas 208. Die Achse 200 umfasst ferner ein erstes und ein zweites Wälzlager 210, 212, eine Orbitalradfelge 214 und einen Zahnkranz 216. Das erste und zweite Wälzlager 210, 212, die Orbitalradfelge 214 und der Zahnkranz 216 sind koaxial zu einer Symmetrieachse 218 angeordnet. Die Orbitalradfelge 214 ist mittels der Wälzlager 210, 212 drehbar an der Achse 200 angeordnet. Die Symmetrieachse 218 bildet eine Drehachse für die Orbitalradfelge 214. Der Zahnkranz 216 dient zum Antrieb der Orbitalradfelge 214 und ist integral mit ihr ausgebildet.

Das Wasserstoffgas 208 dient zum Antrieb eines Wasserstoffverbrennungsmotors eines Fahrzeugs, wobei das Fahrzeug die Achse 200 und den Wasserstoffverbrennungsmotor umfasst. Der Hohlraum 206 ist platzsparend in dem Fahrzeug angeordnet. Die Achse 200 wirkt als tragendes Element des Fahrzeugs und als Hohlraum zum Speichern des Wasserstoffgases 208, so kann vorhandener Bauraum im Fahrzeug besser genutzt werden.

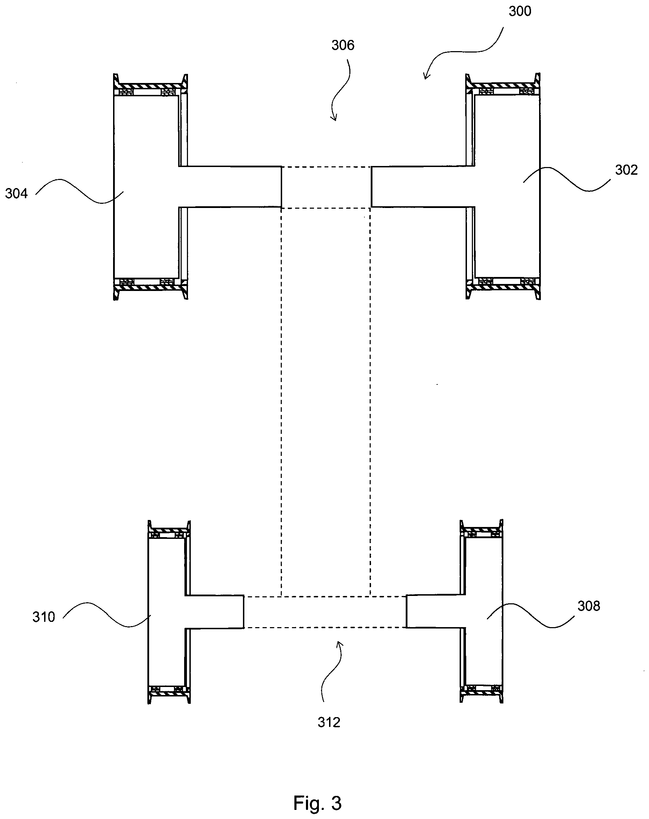

In der Figur 3 ist eine Achsanordnung 300 für einen Traktor gezeigt. Die Achsanordnung 300 umfasst eine erste Teilachse 302 und eine zweite Teilachse 304. Die Teilachse 302 und die Teilachse 304 bilden zusammen eine Hinterachse 306 der Achsanordnung. Ferner umfasst die Achsanordnung 300 eine dritte Teilachse 308 und eine vierte Teilachse 310. Die dritte Teilachse 308 und die vierte Teilachse 310 bilden zusammen eine Vorderachse 312 der Achsanordnung 300. Die Vorderachse 312 und/oder die Hinterachse 306 sind lenkbar ausgelegt.

Die vier Teilachsen 302, 304, 308, 310 umfassen Hohlräume mit einem Gesamtvolumen von 3200 Liter zum Speichern von Wasserstoffgas. Das Wasserstoffgas dient zum Antrieb eines Wasserstoffverbrennungsmotors, einer Brennstoffzelle oder dergleichen im Traktor. Die vier Teilachsen sind platzsparend im Traktor angeordnet, um seine Außenabmessungen nicht zu verändern. Die Vorderachse 312 und die Hinterachse 306 erfüllen achstypische Wirkungen. Sie verbinden z.B. links- und rechtsseitige Räder des Traktors. Zusätzlich umfassen sie Hohlräume zum Speichern des Wasserstoffgases, wodurch vorhandener Bauraum im Traktor besser genutzt werden kann.

### GEWERBLICHE ANWENDBARKEIT

Die Achse 100 und die Achse 200 können als Originalteile, Ersatzteile oder Umrüstteile für ein Nutzfahrzeug, wie zum Beispiel Landfahrzeug; Radfahrzeug; Löschfahrzeug; militärisches Radfahrzeug, z.B.: Trägerfahrzeug, Selbstfahrlafette, Bergefahrzeug, Abschleppfahrzeug, Minenräumfahrzeug; landwirtschaftliches Fahrzeug, z.B.: Traktor, Schlepper, Erntemaschine, Sämaschine; Zugmaschine; selbstfahrendes Arbeitsgerät; Baumaschine, z.B.: Bagger, Fahrbagger, Bohrgerät, Fahrzeugkran, Arbeitsbühne; forstwirtschaftliches Fahrzeug, z.B. Holzvollernter, Tragschlepper, Rückezug, Skidder; Lastkraftwagen; Teleskoplader eingesetzt werden.

Ein Nutzfahrzeug wird meist von einem Dieselmotor angetrieben. Dieselmotoren gelten als sparsam, langlebig und sie produzieren weniger umweltschädliches Kohlendioxid als Benzinmotoren. Dieselmotoren arbeiten mit einem höheren Verdichtungsverhältnis und mit höheren Verbrennungstemperaturen als Benzinmotoren. Deshalb sind Dieselmotoren meist robuster, schwerer und teurer als Benzinmotoren. Dieselkraftstoff weist eine höhere Energiedichte als Benzin auf, sodass Dieselfahrzeuge entweder mit einem kleineren Tank als Benzinfahrzeuge auskommen oder eine höhere Reichweite bzw. Betriebszeit mit einer Tankfüllung haben als Benzinfahrzeuge. Bei der Verbrennung erzeugen Dieselmotoren Rußpartikel, die auch Feinstaub enthalten. Die Rußpartikel werden heutzutage aufwendig durch Dieselpartikelfilter reduziert. Dies verteuert den Einsatz von Dieselmotoren. Ferner erzeugen Dieselmotoren gesundheitsschädliche Stickoxide NOx. Mittels spezieller Katalysatoren mit Harnstoff wird derzeit versucht, den Stickstoffdioxidausstoß bei Dieselmotoren zu reduzieren; auch dies ist aufwendig und teuer.

Um den Problemen von Verbrennungsmotoren für fossile Kraftstoffe zu begegnen werden Nutzfahrzeuge mit Dieselmotoren auf die Verbrennung von Wasserstoff umgerüstet, die auch als Wasserstoffmotor bezeichnet werden, oder sie werden bereits werkseitig mit einem Wasserstoffmotor hergestellt. Wasserstoff hat eine höhere Energiedichte als Dieselkraftstoff. Da Wasserstoff keine Kohlenstoffatome enthält ist das Verbrennungsabgas in solchen Motoren im Wesentlichen umweltschonender und nicht gesundheitsgefährdender Wasserdampf.

Wasserstoff hat unter Normalbedingungen eine geringe Dichte von 0,089882 kg/m³. Für einen effizienten Betrieb des Nutzfahrzeugs mit Wasserstoffmotor ist daher die ausreichende Speicherung bzw. Bevorratung von Wasserstoff wichtig. Die Achse 100, die Achse 200 und die vier Teilachsen 302, 304, 308, 310 ermöglichen das platzsparende Speichern von Wasserstoff, wobei Bauraum im Nutzfahrzeug vorteilhaft ausgenutzt wird.

### LISTE DER BEZUGSZEICHEN

- 100: Achse
- 102: Erster Achsabschnitt
- 104: Zweiter Achsabschnitt
- 106: Boden
- 108: Achsdifferential
- 110: Achswelle
- 112: Antriebsritzel
- 114: Orbitalradfelge
- 116: Zahnkranz
- 118: Symmetrieachse
- 120: Achswellenlager
- 200: Achse
- 202: Erster Hohlraumabschnitt
- 204: Zweiter Hohlraumabschnitt
- 206: Hohlraum
- 208: Wasserstoffgas
- 210: Erstes Wälzlager
- 212: Zweites Wälzlager
- 214: Orbitalradfelge
- 216: Zahnkranz
- 218: Symmetrieachse
- 300: Achsanordnung
- 302: Erste Teilachse
- 304: Zweite Teilachse
- 306: Hinterachse
- 308: Dritte Teilachse
- 310: Vierte Teilachse
- 312: Vorderachse

## Patentansprüche

1. Achse (100; 200; 302, 304, 306, 308) für ein Fahrzeug, insbesondere ein Nutzfahrzeug, mit:
einem ersten Achsabschnitt (102; 202) und
einem zweiten Achsabschnitt (104; 204), der mit dem ersten Achsabschnitt (102; 202) verbunden ist,
**dadurch gekennzeichnet, dass**
der erste Achsabschnitt (102; 202) und der zweite Achsabschnitt (104; 204) einen Hohlraum (206) bilden, der zum Bevorraten von Kraftstoff (208) für den Antrieb des Fahrzeugs ausgelegt ist.

2. Achse (100; 200; 302, 304, 306, 308) nach Anspruch 1
**dadurch gekennzeichnet, dass**
der erste Achsabschnitt (102; 202) und der zweite Achsabschnitt (104; 204) starr miteinander verbunden sind.

3. Achse (100; 200; 302, 304, 306, 308) nach Anspruch 1 oder 2
**dadurch gekennzeichnet, dass**
der Kraftstoff (208) Wasserstoff (208), insbesondere gasförmigen Wasserstoff (208), umfasst.

4. Achse (100; 200; 302, 304, 306, 308) nach einem der vorhergehenden Ansprüche
**dadurch gekennzeichnet, dass**
der zweite Achsabschnitt (104; 204) einen Hohlzylinderabschnitt (104; 204) mit einem Deckel und einem Boden (106) umfasst.

5. Achse (100; 200; 302, 304, 306, 308) nach einem der vorhergehenden Ansprüche
**dadurch gekennzeichnet, dass**
der zweite Achsabschnitt (104; 204) ein Wälzlager (210, 212) umfasst.

6. Achse (100; 200; 302, 304, 306, 308) nach einem der vorhergehenden Ansprüche
**dadurch gekennzeichnet, dass**
die Achse (100; 200; 302, 304, 306, 308) eine Orbitalradfelge (114; 214) umfasst.

7. Achse (100; 200; 302, 304, 306, 308) nach Anspruch 6
**dadurch gekennzeichnet, dass**
die Orbitalradfelge (114; 214) mittels des Wälzlagers (210, 212) drehbar an dem zweiten Achsabschnitt (104; 204) angeordnet ist.

8. Achse (100; 200; 302, 304, 306, 308) nach Anspruch 6 oder 7
**dadurch gekennzeichnet, dass**
die Orbitalradfelge (114; 214) einen Zahnkranz (116; 216) umfasst.

9. Achse (100; 200; 302, 304, 306, 308) nach einem der Ansprüche 6 bis 8
**dadurch gekennzeichnet, dass**
die Achse (100; 200; 302, 304, 306, 308) wenigstens ein Antriebsritzel (112) umfasst, das in den Zahnkranz (116; 216) eingreift und die Orbitalradfelge (114; 214) antreibt.

10. Achse (100; 200; 302, 304, 306, 308) nach einem der Ansprüche 6 bis 9
**dadurch gekennzeichnet, dass**
die Achse (100; 200; 302, 304, 306, 308) einen Niederquerschnittsreifen umfasst, der an der Orbitalradfelge (114; 214) angeordnet ist.

11. Achse (100; 200; 302, 304, 306, 308) nach einem der Ansprüche 6 bis 10
**dadurch gekennzeichnet, dass**
die Achse (100; 200; 302, 304, 306, 308) eine hydropneumatische Federung umfasst.

12. Achse (100; 200; 302, 304, 306, 308) nach einem der vorhergehenden Ansprüche
**dadurch gekennzeichnet, dass**
die Achse (100; 200; 302, 304, 306, 308) eine Einfüllvorrichtung umfasst, die an einem ersten Ende mit dem Hohlraum (206) verbunden ist und an deren zweiten Ende Kraftstoff (208) in den Hohlraum (206) füllbar ist.

13. Achse (100; 200; 302, 304, 306, 308) nach einem der vorhergehenden Ansprüche
**dadurch gekennzeichnet, dass**
die Achse (100; 200; 302, 304, 306, 308) eine Kraftstoffleitung umfasst, die an einem ersten Ende mit dem Hohlraum (206) verbunden ist und an einem zweiten Ende mit einem Verbrennungsmotor verbindbar ist.

14. Achse (100; 200; 302, 304, 306, 308) nach einem vorhergehenden Ansprüche
**dadurch gekennzeichnet, dass**
der Hohlraum (206) eine Verstärkungsstruktur, insbesondere eine Wabenstruktur, umfasst.

15. Achse (100; 200; 302, 304, 306, 308) nach einem vorhergehenden Ansprüche
**dadurch gekennzeichnet, dass**
der Hohlraum (206) einen Kraftstoffinnentank umfasst, wobei der Kraftstoffinnentank vom Hohlraum (206) umgeben ist.

16. Achse (100; 200; 302, 304, 306, 308) nach Anspruch 15
**dadurch gekennzeichnet, dass**
der Kraftstoffinnentank ein Druckventil umfasst.

17. Nutzfahrzeug, insbesondere Traktor, mit
einem Wasserstoffverbrennungsmotor und
wenigstens einer ersten Achse (100; 200; 302, 304, 306, 308) gemäß einem der Ansprüche 1 bis 16.

18. Nutzfahrzeug nach Anspruch 17
**dadurch gekennzeichnet, dass**
die erste Achse (100; 200; 302, 304, 306, 308) und eine zweite Achse (100; 200; 302, 304, 306, 308) eine Hinterachse (306) bilden.

19. Nutzfahrzeug nach Anspruch 17 oder 18
**dadurch gekennzeichnet, dass**
eine dritte Achse (100; 200; 302, 304, 306, 308) und eine vierte Achse (100; 200; 302, 304, 306, 308) eine Vorderachse (312) bilden.

## Claims

1. Axle (100; 200; 302, 304, 306, 308) for a vehicle, in particular a commercial vehicle, comprising:
a first axle portion (102; 202) and
a second axle portion (104; 204) connected to the first axle portion (102; 202),
**characterized in that**
the first axle portion (102; 202) and the second axle portion (104; 204) form a cavity (206) which is designed to store fuel (208) for driving the vehicle.

2. Axle (100; 200; 302, 304, 306, 308) according to claim 1
**characterized in that**
the first axle portion (102; 202) and the second axle portion (104; 204) are rigidly connected to one another.

3. Axle (100; 200; 302, 304, 306, 308) according to claim 1 or claim 2
**characterized in that**
the fuel (208) comprises hydrogen (208), in particular gaseous hydrogen (208).

4. Axle (100; 200; 302, 304, 306, 308) according to any of the preceding claims
**characterized in that**
the second axle portion (104; 204) comprises a hollow cylinder portion (104; 204) having a cover and a base (106).

5. Axle (100; 200; 302, 304, 306, 308) according to any of the preceding claims
**characterized in that**
the second axle portion (104; 204) comprises a rolling bearing (210, 212).

6. Axle (100; 200; 302, 304, 306, 308) according to any of the preceding claims
**characterized in that**
the axle (100; 200; 302, 304, 306, 308) comprises an orbital wheel rim (114; 214).

7. Axle (100; 200; 302, 304, 306, 308) according to claim 6
**characterized in that**
the orbital wheel rim (114; 214) is rotatably arranged on the second axle portion (104; 204) by means of the rolling bearing (210, 212).

8. Axle (100; 200; 302, 304, 306, 308) according to claim 6 or claim 7
**characterized in that**
the orbital wheel rim (114; 214) comprises a gear rim (116; 216).

9. Axle (100; 200; 302, 304, 306, 308) according to any of claims 6 to 8
**characterized in that**
the axle (100; 200; 302, 304, 306, 308) comprises at least one drive pinion (112) which engages the gear rim (116; 216) and drives the orbital wheel rim (114; 214).

10. Axle (100; 200; 302, 304, 306, 308) according to any of claims 6 to 9
**characterized in that**
the axle (100; 200; 302, 304, 306, 308) comprises a low-profile tire arranged on the orbital wheel rim (114; 214).

11. Axle (100; 200; 302, 304, 306, 308) according to any of claims 6 to 10
**characterized in that**
the axle (100; 200; 302, 304, 306, 308) comprises a hydropneumatic suspension.

12. Axle (100; 200; 302, 304, 306, 308) according to any of the preceding claims
**characterized in that**
the axle (100; 200; 302, 304, 306, 308) comprises a filling device which is connected at a first end to the cavity (206) and at the second end of which fuel (208) can be filled into the cavity (206).

13. Axle (100; 200; 302, 304, 306, 308) according to any of the preceding claims
**characterized in that**
the axle (100; 200; 302, 304, 306, 308) comprises a fuel line which is connected at a first end to the cavity (206) and can be connected at a second end to an internal combustion engine.

14. Axle (100; 200; 302, 304, 306, 308) according to any preceding claims
**characterized in that**
the cavity (206) has a reinforcing structure, in particular a honeycomb structure.

15. Axle (100; 200; 302, 304, 306, 308) according to any preceding claims
**characterized in that**
the cavity (206) comprises an inner fuel tank, the inner fuel tank being surrounded by the cavity (206).

16. Axle (100; 200; 302, 304, 306, 308) according to claim 15
**characterized in that**
the inner fuel tank comprises a pressure valve.

17. Commercial vehicle, in particular tractor, comprising
a hydrogen combustion engine and
at least one first axle (100; 200; 302, 304, 306, 308) according to any of claims 1 to 16.

18. Commercial vehicle according to claim 17
**characterized in that**
the first axle (100; 200; 302, 304, 306, 308) and a second axle (100; 200; 302, 304, 306, 308) form a rear axle (306).

19. Commercial vehicle according to claim 17 or claim 18
**characterized in that**
a third axle (100; 200; 302, 304, 306, 308) and a fourth axle (100; 200; 302, 304, 306, 308) form a front axle (312).

## Revendications

1. Essieu (100 ; 200 ; 302, 304, 306, 308) pour un véhicule, en particulier un véhicule utilitaire, comportant :
une première section d'essieu (102 ; 202) et
une seconde section d'essieu (104 ; 204) qui est reliée à la première section d'essieu (102 ; 202),
**caractérisé en ce que**
la première section d'essieu (102 ; 202) et la seconde section d'essieu (104 ; 204) forment une cavité (206) qui est conçue pour stocker du carburant (208) pour l'entraînement du véhicule.

2. Essieu (100 ; 200 ; 302, 304, 306, 308) selon la revendication 1
**caractérisé en ce que**
la première section d'essieu (102 ; 202) et la seconde section d'essieu (104 ; 204) sont reliées rigidement entre elles.

3. Essieu (100 ; 200 ; 302, 304, 306, 308) selon la revendication 1 ou 2
**caractérisé en ce que**
le carburant (208) comprend de l'hydrogène (208), en particulier de l'hydrogène gazeux (208).

4. Essieu (100 ; 200 ; 302, 304, 306, 308) selon l'une des revendications précédentes
**caractérisé en ce que**
la seconde section d'essieu (104 ; 204) comprend une section cylindrique creuse (104 ; 204) comportant un élément de recouvrement et un fond (106).

5. Essieu (100 ; 200 ; 302, 304, 306, 308) selon l'une des revendications précédentes
**caractérisé en ce que**
la seconde section d'essieu (104 ; 204) comprend un palier à roulement (210, 212).

6. Essieu (100 ; 200 ; 302, 304, 306, 308) selon l'une des revendications précédentes
**caractérisé en ce que**
l'essieu (100 ; 200 ; 302, 304, 306, 308) comprend une jante de roue orbitale (114 ; 214).

7. Essieu (100 ; 200 ; 302, 304, 306, 308) selon la revendication 6
**caractérisé en ce que**
la jante de roue orbitale (114 ; 214) est disposée de manière à pouvoir tourner sur la seconde section d'essieu (104 ; 204) au moyen du palier à roulement (210, 212).

8. Essieu (100 ; 200 ; 302, 304, 306, 308) selon la revendication 6 ou 7
**caractérisé en ce que**
la jante de roue orbitale (114 ; 214) comprend une couronne dentée (116 ; 216).

9. Essieu (100 ; 200 ; 302, 304, 306, 308) selon l'une des revendications 6 à 8
**caractérisé en ce que**
l'essieu (100 ; 200 ; 302, 304, 306, 308) comprend au moins un pignon d'entraînement (112) qui vient en prise avec la couronne dentée (116 ; 216) et entraîne la jante de roue orbitale (114 ; 214).

10. Essieu (100 ; 200 ; 302, 304, 306, 308) selon l'une des revendications 6 à 9
**caractérisé en ce que**
l'essieu (100 ; 200 ; 302, 304, 306, 308) comprend un pneu à basse section transversale qui est disposé sur la jante de roue orbitale (114 ; 214).

11. Essieu (100 ; 200 ; 302, 304, 306, 308) selon l'une des revendications 6 à 10
**caractérisé en ce que**
l'essieu (100 ; 200 ; 302, 304, 306, 308) comprend une suspension hydropneumatique.

12. Essieu (100 ; 200 ; 302, 304, 306, 308) selon l'une des revendications précédentes
**caractérisé en ce que**
l'essieu (100 ; 200 ; 302, 304, 306, 308) comprend un dispositif de remplissage qui est raccordé à la cavité (206) au niveau d'une première extrémité et du carburant (208) peut être rempli dans la cavité (206) au niveau de sa seconde extrémité.

13. Essieu (100 ; 200 ; 302, 304, 306, 308) selon l'une des revendications précédentes
**caractérisé en ce que**
l'essieu (100 ; 200 ; 302, 304, 306, 308) comprend une conduite de carburant qui est raccordée à la cavité (206) au niveau d'une première extrémité et peut être raccordée à un moteur à combustion interne au niveau d'une seconde extrémité.

14. Essieu (100 ; 200 ; 302, 304, 306, 308) selon l'une des revendications précédentes
**caractérisé en ce que**
la cavité (206) comprend une structure de renforcement, en particulier une structure en nid d'abeilles.

15. Essieu (100 ; 200 ; 302, 304, 306, 308) selon l'une des revendications précédentes
**caractérisé en ce que**
la cavité (206) comprend un réservoir interne de carburant, dans lequel le réservoir interne de carburant est entouré par la cavité (206).

16. Essieu (100 ; 200 ; 302, 304, 306, 308) selon la revendication 15
**caractérisé en ce que**
le réservoir intérieur de carburant comprend une soupape de pression.

17. Véhicule utilitaire, en particulier tracteur, comportant
un moteur à combustion interne à hydrogène et
au moins un premier essieu (100 ; 200 ; 302, 304, 306, 308) selon l'une des revendications 1 à 16.

18. Véhicule utilitaire selon la revendication 17
**caractérisé en ce que**
le premier essieu (100 ; 200 ; 302, 304, 306, 308) et un deuxième essieu (100 ; 200 ; 302, 304, 306, 308) forment un essieu arrière (306).

19. Véhicule utilitaire selon la revendication 17 ou 18
**caractérisé en ce que**
un troisième essieu (100 ; 200 ; 302, 304, 306, 308) et un quatrième essieu (100 ; 200 ; 302, 304, 306, 308) forment un essieu avant (312).
